# EUROPEAN PATENT APPLICATION

(11) **EP 1 215 508 A1**
(43) Date of publication of application: **19.06.2002**
(21) Application number: 00311309.9
(22) Date of filing: 18.12.2000
(51) Int. Cl.: G01S 5/14, G01S 5/00

(54) **Wireless position location system and method using differential global system information and general packet radio switching technology**

(71) Applicant: LUCENT TECHNOLOGIES INC., Murray Hill, New Jersey 07974-0636 (US)
(72) Inventor: Chakrabarti, Satyabrata, Aurora, Illinois 60504 (US); Mishra, Amitabh, Oak Brook, Illinois 60523 (US)
(74) Representative: Buckley, Christopher Simon Thirsk

(57) **Abstract**

A wireless position location system and method is disclosed for determining location of a mobile transceiver, such as a mobile station or wireless telephone. The system employs differential global positioning system (DGPS) information to accurately determine the location of the mobile transceiver. A cellular base transceiver station (BTS) may be used as a local reference station (LRS) which transmits the DGPS information to the mobile transceiver via general packet radio services (GPRS). The mobile transceiver is equipped to receive global positioning system (GPS) signals from GPS satellites. The mobile transceiver uses the DGPS information and the GPS signals to determine its location. The BTS may comprise an automatic position location (APL) system for periodically interrogating the mobile transceiver to respond and for automatically contacting assistance with the location of the mobile transceiver, if the mobile transceiver doesn't properly respond within a set time period.

## Description

### Background Of The Invention

The present invention is directed to a system and method for determining location of a mobile transceiver and in particular, a system and method which use wireless technologies, such as general packet radio switching technology, and differential global positioning system technology to determine a location of a mobile station.

This section is intended to introduce the reader to various aspects of art that may be related to various aspects of the present invention which are described and/or claimed below. This discussion is believed to be helpful in providing the reader with background information to facilitate a better understanding of the various aspects of the present invention. Accordingly, it should be understood that these statements are to be read in this light, and not as admissions of prior art.

Wireless service providers are becoming more and more interested in new and improved Wireless Position Location Services (WPLS). This increased interested in WPLS is in part induced by a recent United States Federal Communications Commission (FCC) ruling that requires all mobile communications network operators be able to accurately locate any mobile subscriber requesting emergency 911 service. This ruling is intended to help rescue personnel in locating and assisting a mobile subscriber in need.

Mobile communications network operators are also interested in providing other new and improved applications of WPLS to their subscribers. For example, "intelligent vehicle navigation systems" provide navigational instructions to subscribers on street maps and may eventually even automatically steer a vehicle to a desired destination. Further applications of WPLS include auto-location of unconscious individuals, recovery of stolen vehicles, electronic "restraints for criminals", fleet management for taxicabs and trucking companies and the like.

Current WPLS systems are generally categorized as either mobile station (MS)-based systems or network-based systems. In the MS-based systems, the MS determines its own position by using an external system, such as a Global Positioning System (GPS) or the wireless network. In the network-based systems, the wireless network uses its own specialized facilities to determine the location of the MS.

Unfortunately, prior systems have experienced various problems or inefficiencies. As is well known, the GPS experiences various signal impairments when a GPS receiver is blocked from receiving signals from the required number of GPS satellites. These problems are particularly prevalent in urban areas due to obstacles, such as tall buildings and the like. Further, wireless network operators desire a WPLS system which is accurate, which efficiently uses the wireless bandwidth and which is readily adaptable to current wireless architectures. A WPLS should also support automatic location of a MS even if the mobile subscriber is unable to respond.

Accordingly, there is a continuing need for an improved system and method for determining the position of a wireless mobile station which provides accurate position information, which operates even if the mobile subscriber is unable to respond, which is readily adaptable to current wireless architectures and which is relatively robust in high congestion areas, such as in urban environments.

### Summary Of The Invention

Certain aspects commensurate in scope with the originally claimed invention are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below. Since the following is for summary purposes only, none of the aspects present below should be considered essential to the present invention, which is solely defined by the appended claims.

In accordance with an aspect of the present invention, a wireless position location system and method is provided in which differential global positioning system (DGPS) information is used to determine a location of a mobile transceiver. The DGPS information is transmitted from a local reference station (LRS) over general packet radio services (GPRS). The mobile transceiver may be a mobile station or cellular telephone. Preferably, the LRS is a base transceiver station (BTS) in a cellular network.

In accordance with another aspect of the present invention, . The LRS may comprise an automatic position location (APL) system for periodically requesting that the mobile transceiver respond and for automatically contacting assistance with the location of the mobile transceiver, if the mobile transceiver doesn't properly respond within a set time period.

These and other features and advantages of the present invention will become apparent from the following detailed description, the accompanying drawings and the appended claims.

### Brief Description Of The Drawings

The foregoing and other advantages of the invention will become apparent upon reading the following detailed description and upon reference to the drawings in which:
FIG. 1 is a graphical representation of a system in accordance with the present invention in which a location of a mobile transceiver is determined;
FIG. 2 is a graphical representation of the system in FIG. 1 showing details of a GPRS/GSM network in accordance with an aspect of the present invention which may advantageously be employed to determine location of the mobile transceiver;
FIG. 3 is a block diagram of the mobile transceiver in accordance with another aspect of the present invention; and
FIG. 4 is a block diagram of a wireless switching center which may be employed in the GPRS/GSM network shown in FIG. 2 in accordance with the present invention.

### Detailed Description Of The Invention

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developer's specific goals, such as compliance with system related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

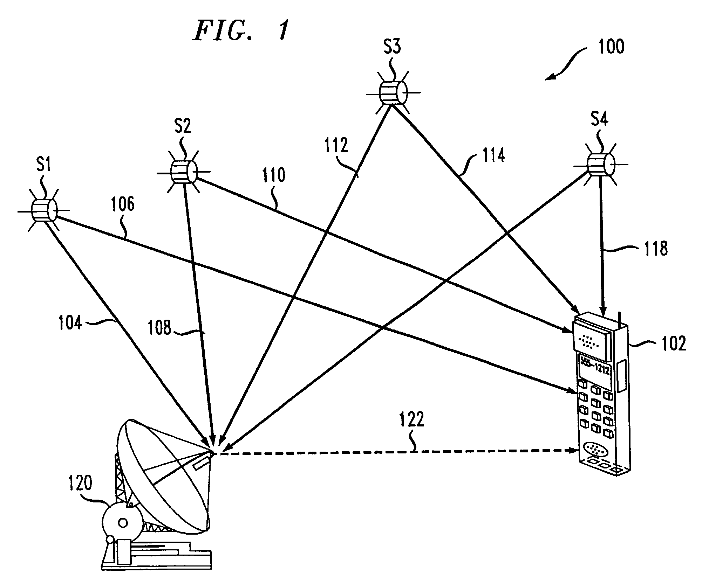

A system 100 for determining a location of a mobile transceiver, or mobile station (MS) 102, in accordance with the present invention is shown in FIG. 1. For ease of description and clarity, Wireless Position Location Services (WPLS) will be used to designate the general concept of determining position over a wireless communication system. Four global positioning system (GPS) satellites S1, S2, S3 and S4 transmit GPS position signals 104, 106, 108, 110, 112, 114, 116 and 118. The MS 102 is shown receiving the GPS position signals 106, 110, 114 and 118 from respective GPS satellites S1, S2, S3 and S4. A known transceiver, shown as a base station (BS) 120, receives the GPS position signals 104, 108, 112 and 116 from respective GPS satellites S1, S2, S3 and S4.

As is known in the art, a device typically needs to receive GPS position signals from at least four GPS satellites in order to relatively accurately determine its position. In these prior systems, the position of the device is then calculated based on measuring the amount of time it took for each of the GPS position signals to travel from its associated GPS satellite to the device. These measurements are known in the art as Time of Arrival (TOA) measurements.

The TOA measurements are based on time stamps included in the GPS position signals which are generated by highly accurate and stable clocks on the GPS satellites. For very accurate TOA measurements, a MS would also need a very accurate and stable clock which unfortunately is usually expensive and relatively large. A number of methods are known in the art for calculating position, or location, based on received GPS position signals. Since the structure and philosophy of the various methods are not important to the present invention beyond the generation and transmission of information from which a position of the MS may be calculated, details of such methods will not be further disclosed herein.

For current civilian GPS, position can be determined with an accuracy of about 100 meters. Although this accuracy is sufficient for some applications, other applications, such as Autonomous Position Location and Intelligent Vehicle Navigation, require a much better accuracy. In response to this need for better accuracy, differential GPS (DGPS) was developed. In DGPS, a local reference station (LRS) containing a GPS receiver is used to correct for various errors in position determination calculations. The LRS is located at a precisely surveyed location and includes a very accurate and stable clock, similar to the clocks used onboard the GPS satellites. In brief, the LRS receives the GPS position signals and calculates its own position based on the received signals and its highly accurate clock. The difference between the calculated LRS position and the actual LRS position is then used to generate a DGPS correction signal which is transmitted to nearby mobile transceivers. A mobile transceiver uses the DGPS correction signal to compensate for errors associated with its own received GPS position signals.

As will be appreciated by those skilled in the art, many factors determine the accuracy of the DGPS. For example, as the distance between the LRS and a mobile transceiver is increased, the accuracy of the DGPS correction is reduced (spatial decorrelation). Additionally, as the time between the last DGPS correction and the position determination by the MS is increased, the accuracy of the DGPS is reduced (temporal decorrelation). Typically, DGPS offers an accuracy of about two meters. Those desiring further information regarding the general operation of GPS and DGPS are directed to U.S. Patent Number 5,559,520, entitled "Wireless Information System for Acquiring Location Related Information", issued on September 24, 1996 to Barzegar et al, the disclosure of which is hereby incorporated by reference.

In accordance with the present invention, the BS 120, as shown in FIG. 1, operates as a LRS. The BS 120 receives the GPS position signals 104, 108 110 and 116, calculates any error relative to those signals 104, 108, 110 and 116 and transmits a DGPS correction signal 122 to the MS 102. A wireless BS is particularly suited to operate as a LRS, especially in urban areas. By placing BSs on top of tall buildings in urban areas, multipath degradation of the system can be reduced or eliminated, and much improved line-of-sight access to the GPS satellites is accomplished. In addition, cellular network operators are increasingly using micro-cellular configurations, with cell radiuses of around one hundred meters. Consequently, the deleterious effects of having the BS (or LRS) a significant distance from the MS are minimized in the present invention.

The present invention advantageously employs DGPS to determine the location of the MS 102. The BS 120 generates the DGPS correction signals 122 and transmits the DGPS correction signals 122 over general data packet services (GDPS) on the Global System for Mobile Communications (GSM). By using GDPS, the present invention provides significant advantages that were heretofore unavailable. For example, the Radio Technical Commission for Maritime Services (RTCM) 104 standard, which has been adopted by some commercial receivers, specifies a message set for DGPS operation which contains a sequence of 30-bit words. The GPS data transmission rate is 50 bits per second (bps). Thus, for such messages and data rates, there could potentially be a space of as much as 27 seconds between consecutive corrections sent out by a given LRS. In contrast, public wireless networks generally support data rates of at least 1.2 kilobits per second (kbps), corresponding to 1.125 seconds between corrections.

A packet-mode wireless data transport network, such as GDPS, offers a highly efficient mechanism for DGPS broadcasts, and further provides inherently robust error detection and correction capabilities. GDPS is implemented as a functional overlay on GSM and advantageously does not use any circuit-switched resources of the GSM. As those skilled in the art will readily appreciate, use of a circuit-switched resources is not desired since a new call would need to be made to each pertinent mobile user from the BS for every correction update.

GPRS is designed to offer both connection-oriented and connection-less bidirectional data rates of up to 9.6 kbps for each temporarily dedicated traffic channel, called packet data channels (PDCH). The PDCH have variable length packet sizes with a preferred value of up to 500 bytes for transactions at a rate of several transactions per minute. GPRS also provides for Point-to-Point (PTP) and Point-to-Multipoint (PTM) communication, fast access time and robust error detection and correction at the air interface. In addition, the GSM Short Message Service (SMS) feature can be transported over the GPRS radio channel. The GPRS specification issued by the European Telecommunications Standards Institute (ETSI) calls for the probability of lost, corrupt, duplicate or out-of-sequence packets to be 10⁻⁹ for group communication (reaching all users in a specific geographical area), and between 10⁻³ and 10⁻⁴ for multicast communication.

GPRS supports three modes of operation for mobile transceivers, or mobile stations. In class A mode of operation, the MS operates GPRS and other GSM services simultaneously. In accordance with one aspect of the present invention, the MSs operate in class A mode. GPRS is important to the present invention as an improved and highly efficient transport mechanism for transmitting correction information from the BS, or LRS, to the mobile transceivers, or MSs. Those desiring additional information on the structure and implementation of GPRS, or GSM in general, are directed to the ETSI standards for GSM.

For clarity and ease of description, the structure, control and arrangement of the conventional components and circuits have, for the most part, been illustrated in the drawings by readily understandable block representations and schematic diagrams, which show only those specific details that are pertinent to the present invention. These block representations and schematic diagrams have been employed in order not to obscure the disclosure with structural details which will be readily apparent to those skilled in the art having the benefit of the description herein.

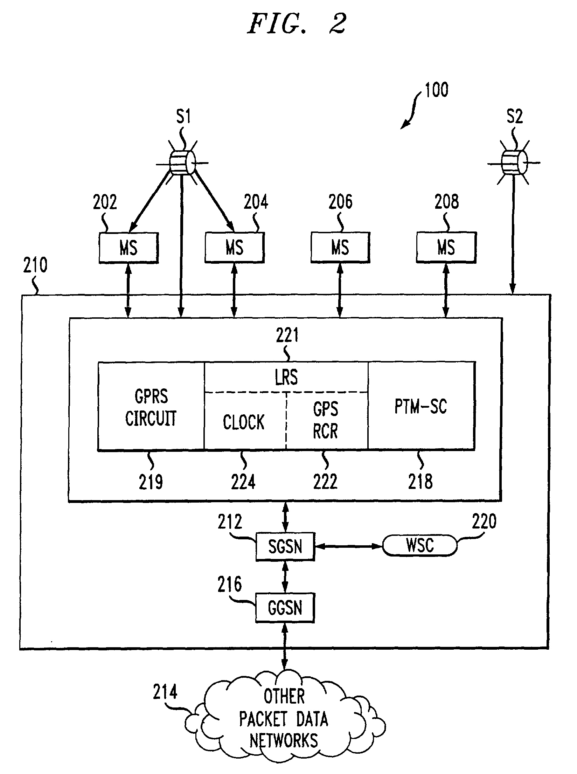

Referring now to FIG. 2, a more detailed graphical illustration of a GPRS-based WLPS system 200 using DGPS in accordance with the present invention is shown. The system 200 comprises the BS 120 and multiple MSs 202, 204, 206 and 208. It should be appreciated that although only two satellites S 1 and S2 are shown in FIG. 2, there are 24 GPS satellites currently orbiting the earth and any number may be in communication at a given instant of time with the BS 120 and/or one or more of the MSs 202, 204, 206 and 208. A GPRS/GSM network 210 is generally shown including a Service GPRS Support Node (SGSN) 212 which tracks the locations of the MSs 202, 204, 206 and 208, performs security functions and access control and is responsible for routing the user data packets to the MSs 202, 204, 206 and 208 within its service area. Preferably, the SGSN 212 and the BS 120 communicate via Frame Relay.

The SGSN 212 receives and sends information from and to other external packet data networks 214 through a Gateway GPRS Service Node (GGSN) 216. The GGSN 216 provides interworking functions with the other external packet data networks 214, maintains the addressing, routing and packet transfer capabilities to send user data packets to a specific SGSN for the intended destination MS. Preferably, the GGSN 216 and SGSN 212 communicate using the Internet Protocol (IP) based GPRS backbone network, as set forth in the GPRS specifications from ETSI.

In invoking GPRS services, a logical link must be first established between the SGSN 212 and one of the MSs 202, 204, 206 or 208. For description purposes, MS 202 will only be discussed, however, those skilled in the art will appreciate that the discussion will readily apply to any of the other MSs 204, 206 or 208. Upon establishment of the logical link, the MS 202 is recognized by the network 210 and may be used thereafter for SMS over GPRS, paging via the SGSN 212 and notification of incoming GPRS data. The GPRS address for the MS 202 is also transmitted to the GGSN 216 so the GGSN 216 can use the address for exchanging data with other MSs and for providing interworking with the other external packet data networks 214.

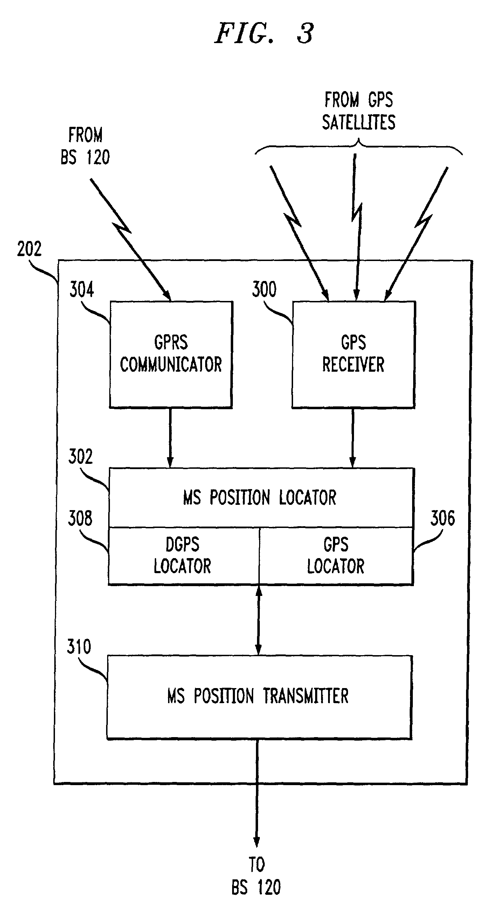

In FIG. 3 a block diagram of the MS 202 is shown. In order to accommodate areas where DGPS may not be available, the MS 202 preferably, although not necessarily, has the capability to determine its position based solely on GPS position signals. The MS 202 comprises a GPS receiver 300 for detecting and receiving the GPS position signals transmitted by GPS satellites. The GPS receiver 300 provides these received GPS position signals, or information obtained therefrom, to a MS position locator 302. Information relating to the DGPS correction signals 122 is received, if available, at a GPRS communicator 304 in the MS 202. In accordance with the present invention, the DGPS correction information is transmitted from the BS 120 to the MS 202 via GPRS. The GPRS communicator 304 provides the correction information to the MS position locator 302. The MS position locator 302 consists of a GPS locator 306 which in the absence of DGPS determines the position of the MS 202 using any of a number of known methods for determining position based on GPS.

If DGPS is available, a DGPS locator 308 uses the GPS position signals and the DGPS correction signals 122 to determine the position of the MS 202 using any number of known methods for determining position based on DGPS. As noted, using the DGPS likely results in a more accurate determination of the location of the MS 202 than using only civilian GPS. The location of the MS 202 is then transmitted to the BS 120 via a MS position transmitter 310. The MS position transmitter 310 may use any appropriate format for transmitting its location information back to the BS 120, however, it is preferred that GPRS be used. The MS 202 uploads its position to the BS 102 preferably using a PTP service. The GPS receiver 300, MS position locator 302, the GPRS communicator 304 and the MS position transmitter 310 are generally termed a MS location system.

Referring again to FIG. 2, it is preferred, although not necessary, that every BS in a network contain the needed LRS functions and that every BS is able to multicast the DPGS correction signals (or data) once every 2 seconds to all MSs under its coverage. In accordance with the present invention, the BSs are selected to be used as LRSs and not the SGCNs, since the BSs are far more ubiquitous than the SGCNs.

The BS 120 is shown comprising a Point-to-Multipoint Service Center (PTM-SC) 218 to broadcast (multicast) the DGPS data to all eligible MSs. Each BS may need to be equipped with the GPRS Multicast Service Access Protocol (MSAP) which is specified in the ETSI standard GSM 03:61. However, not all of the functions of the PTM-SC 218 as set forth in GSM 03.61 are required for WPLS services, nor are they desirable for performance reasons. Since the multicast from a BS is targeted only to the MSs within its own area of coverage, it is likely that a simplified version of the IP multicast protocol may be used to minimize network traffic load and associated delays.

The BS 120 also includes a GPRS circuit 219 for communicating via GPRS. A LRS circuit 221 includes a GPS receiver 222 for receiving the GPS position signals and for generating a DGPS correction signal based on the GPS position signals and a clock circuit 224 as discussed above.

A wireless switching center (WSC) 220 is a logical node which contains a variety of functions and protocols required by provide one or more WPLS services to the user. For exemplary purposes only, and not as a limitation, two such WPLS services will be discussed herein: Autonomous Position Location (APL) and Intelligent Vehicle Navigation (IVN). APL is a service in which the user equipment, such as the MS 202, is determining its position without any action by the user, such as, for example, when a user is alone and unconscious due to an accident. As long as the MS 202 is powered on, the MS 202 can calculate its position from the GPS and the DGPS information from the BS 120 and upload its position to the WSC 220. Perhaps one of the simplest of APL services is the E-911 service, where in an emergency, the user dials the E-911 service over GSM and sends location information to the E-911 WSC over the traffic channel used for voice communications. The E-911 WSC can then send help to the user at the transmitted location, perhaps with additional input from the user. In accordance with the present invention, the GPRS in GSM is used when a MS is required to automatically send GPS, or DGPS, location information to the E-911 WSC (for speech impaired individuals for example), possibly together with an identification of the user (as a subscriber to GPRS).

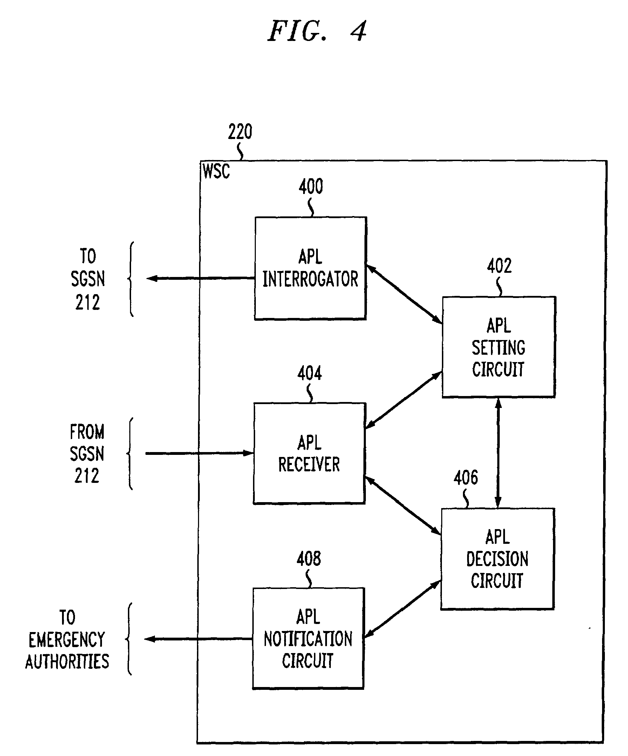

In another APL service which may be supported by the present invention, the WSC 220 automatically decides based on a predetermined criteria whether a user needs emergency assistance. As shown in FIG. 4, the WSC 220 consists of an APL interrogator 400 which periodically polls (such as every hour) an MS, such as the MS 202, over GPRS requesting a manual response within a fixed time period. The manual response may be to select a key or any other appropriate response. The fixed time period may be for example three minutes. All of the settings are stored, modified and executed from an APL setting circuit 402. An ARL receiver 404 detects whether a response is given. If no response is given within the designated time, a APL decision circuit 406 then determines a next course of action.

For example, the APL decision circuit 406 may prompt the APL interrogator 400 to reinterrogate the MS 200 or prompt a APL notification circuit 408 to request emergency assistance through the appropriate telecommunications systems, such as the network 210. If emergency assistance is requested, the network 210 may automatically provide the location information last received from the MS 202 to the emergency authorities. By inputting the appropriate instructions into the MS 202, the user is able to suspend the APL service by so notifying the APL setting circuit 402.

Although the description of the present invention has been made in reference to various hardware and software systems, it should be appreciated that the teaching of the present invention is not limited for use with only such systems and that, instead, the teaching of the present invention is applicable to a large number of possible hardware and software embodiments.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modification, equivalents and alternatives falling within the spirit and scope of the invention as defined by the following appended claims.

## Claims

1. A wireless position location system comprising:
a base transceiver located at a known location for transmitting correction information over general packet radio services (GPRS); and
a mobile transceiver for receiving global positioning system (GPS) information from a plurality of satellites, for receiving the correction information over the GPRS and for determining position based on the correction information and the GPS information.

2. The wireless position location system as recited in claim 1 wherein the mobile transceiver comprises a mobile station.

3. The wireless position location system as recited in claim 2 wherein the base transceiver comprises a base station.

4. The wireless position location system as recited in claim 3 wherein the base station comprises a local reference station (LRS) circuit for receiving GPS information and for generating the correction information based on the received GPS information and the known location of the base station.

5. The wireless position location system as recited in claim 4 wherein the LRS circuit comprises:
a clock circuit for generating timing information, and
wherein the LRS circuit generates the correction information based on the timing information, the received GPS information and the known location of the base station.

6. The wireless position location system as recited in claim 5 wherein the mobile station comprises a mobile station position system for determining location of the mobile station based on the GPS information and the correction information and for transmitting the location of the mobile station to the base station.

7. The wireless position location system as recited in claim 6 wherein the mobile station position system comprises a GPS locator for determining the location of the mobile station from the GPS information in the absence of the correction information.

8. The wireless position location system as recited in claim 7 wherein the mobile station position system comprises a GPRS communicator for receiving the correction information and for transmitting the location of the mobile station over GPRS.

9. The wireless position location system as recited in claim 6 comprising a service GPRS service node (SGSN) for storing the location of the mobile station and for communicating the location of the mobile station with other networks.

10. The wireless position location system as recited in claim 8 wherein the GPRS communicator transmits the location of the mobile station over GPRS to the base station in point-to-point format.

11. The wireless position location system as recited in claim 3 wherein the base station transmits the correction information in point-to-multipoint format.

12. The wireless position location system as recited in claim 3 comprising a wireless switching center for prompting the base station to request a response from the mobile station, for detecting whether the mobile station responds and for notifying assistance if a predetermined criteria is met.

13. The wireless position location system as recited in claim 12 wherein the wireless switching center comprises autonomous position setting circuit for setting the predetermined criteria as receiving the response within a selected time period.

14. A wireless position location system comprising:
a base station at a known location for receiving global positioning system (GPS) information from GPS satellites, for generating a differential GPS signal based on the GPS information and for transmitting the differential GPS signal over general packet radio services (GPRS) in a point-to-multipoint format; and
a mobile station for receiving GPS information from the GPS satellites, for receiving the differential GPS (DGPS) correction information over the GPRS and for determining a location of the mobile station based on the GPS information and the differential GPS information.

15. The wireless position location system as recited in claim 14 wherein the mobile station comprises a GPS locator for determining the location of the mobile station from the GPS information in the absence of the DGPS correction information.

16. The wireless position location system as recited in claim 14 wherein the mobile station comprises a mobile station position system for determining location of the mobile station based on the GPS information and the correction information and for transmitting the location of the mobile station to the base station.

17. The wireless position location system as recited in claim 14comprising an automatic position location (APL) system for periodically interrogating the mobile station and for contacting assistance based on a response of the mobile station to the interrogation.

18. A method for detecting a location of a mobile transceiver comprising the steps of:
receiving global positioning system (GPS) information at the mobile transceiver and a base transceiver located at a known location;
detecting errors in the GPS information at the base transceiver;
communicating the detected errors to the mobile transceiver over general packet radio service (GPRS); and
determining the location of the mobile transceiver based on the detected errors and the GPS information received at the mobile transceiver.

19. The method as recited in claim 18 wherein the step of detecting errors comprises the steps of:
generating timing information at the base transceiver; and
comparing the known location of the base transceiver and the timing information to the received GPS information to detect errors.

20. The method as recited in claim 18 comprising the step of communicating the location of the mobile transceiver to the base transceiver.

21. The method as recited in claim 20 wherein the step of communicating comprises the step of communicating over GPRS the location of the mobile transceiver to the base transceiver.

22. The method as recited in claim 21 wherein the step of communicating over GPRS comprises the step of communicating in a point-to-point format.

23. The method as recited in claim 18 comprising the steps of:
sending a request from the base transceiver to the mobile transceiver for a response;
detecting whether the requested response is transmitted by the mobile transceiver;
substantially automatically contacting assistance based on whether the requested reponse is received at the base transceiver.

24. The method as recited in claim 23 wherein the step of sending a request comprises the step of send the request over GPRS.

25. The method as recited in claim 23 wherein the step of substantially automatically contacting assistance comprises the steps of:
selecting a time period;
determining whether the requested response is received within the time period; and
contacting assistance if the requested response is not received within the time period.
